# EUROPEAN PATENT APPLICATION

(11) **EP 3 279 799 A1**
(43) Date of publication of application: **07.02.2018**
(21) Application number: 16771887.3
(22) Date of filing: 03.02.2016
(51) Int. Cl.: G06F 13/00, G06F 17/30

(54) **INFORMATION PROCESSING DEVICE, INFORMATION PROCESSING METHOD, AND COMPUTER PROGRAM**

(30) Priority: 31.03.2015 JP 2015073834
(71) Applicant: Sony Corporation, Tokyo 108-0075 (JP)
(72) Inventor: MOMOTANI, Shosuke, Tokyo 108-0075 (JP); MOCHIZUKI, Daisuke, Tokyo 108-0075 (JP); SATO, Norihiko, Tokyo 108-0075 (JP)
(74) Representative: MFG Patentanwälte Meyer-Wildhagen Meggle-Freund Gerhard PartG mbB
(86) International application number: PCT/JP2016/053219
(87) International publication number: WO 2016/158003

(57) **Abstract**

[Object] To provide an information processing apparatus capable of easily sharing information on a status of a user with the other party while securing privacy on the basis of a relationship with the other party with whom the information on the status of the user is to be shared.

[Solution] Provided is the information processing apparatus including a control unit configured to acquire status information on a status of a first user and change granularity of the status information to be presented to a second user on the basis of a relationship between the first user and the second user.

## Description

### Technical Field

The present disclosure relates to an information processing apparatus, an information processing method, and a computer program.

### Background Art

Various technologies for allowing a user to share information with another user on a social networking service (SNS) or the like have been proposed (see, for example, Patent Literatures 1 to 3). In a case where a user shares information with another user, to what degree of information is presented to which user is set in advance.

### Citation List

### Patent Literature

Patent Literature 1: WO 2014/136466
Patent Literature 2: WO 2014/203597
Patent Literature 3: JP 2015-36836A

### Disclosure of Invention

### Technical Problem

In a case where information obtained by a device that a user uses is shared with another user, it takes time and effort for the user to provide a setting for presenting each piece of the information. Further, in a case where information obtained by the device that the user uses is shared with another user, information that is not desired to be known to the other party is known if a setting for sharing is not appropriately provided. Thus, there is a risk that, although the user desires to protect privacy, the privacy cannot be protected.

In view of this, the present disclosure proposes an information processing apparatus, an information processing method, and a computer program, each of which is new, is improved, and is capable of easily sharing information on a status of a user with the other party while securing privacy on the basis of a relationship with the other party with whom the information on the status of the user is to be shared.

### Solution to Problem

According to the present disclosure, there is provided an information processing apparatus including: an acquisition unit configured to acquire relationship information indicating a relationship between a first user and a second user different from the first user; and a control unit configured to change, on the basis of the relationship information, a degree of detail of presentation information to be presented to the second user on the basis of status information indicating a status of the first user.

In addition, according to the present disclosure, there is provided an information processing method including: causing a computer to acquire relationship information indicating a relationship between a first user and a second user different from the first user; and causing the computer to change, on the basis of the relationship information, a degree of detail of presentation information to be presented to the second user on the basis of status information indicating a status of the first user.

In addition, according to the present disclosure, there is provided a computer program for causing a computer to execute acquiring relationship information indicating a relationship between a first user and a second user different from the first user, and changing, on the basis of the relationship information, a degree of detail of presentation information to be presented to the second user on the basis of status information indicating a status of the first user.

### Advantageous Effects of Invention

As described above, according to the present disclosure, it is possible to provide an information processing apparatus, an information processing method, and a computer program, each of which is new, is improved, and is capable of easily sharing information on a status of a user with the other party while securing privacy on the basis of a relationship with the other party with whom the information on the status of the user is to be shared.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory view showing a configuration example of an information processing system 1 according to an embodiment of the present disclosure.
[FIG. 2] FIG. 2 is an explanatory view showing a functional configuration example of an information processing apparatus 100 according to an embodiment of the present disclosure.
[FIG. 3] FIG. 3 is an explanatory view showing a functional configuration example of a headset unit 110.
[FIG. 4] FIG. 4 is an explanatory view showing a functional configuration example of a main body unit 130.
[FIG. 5] FIG. 5 is an an explanatory view showing a functional configuration example of an arithmetic logic unit 136.
[FIG. 6] FIG. 6 is an explanatory view showing a functional configuration example of a display unit 160.
[FIG. 7] FIG. 7 is a flowchart showing an operation example of the information processing apparatus 100 according to an embodiment of the present disclosure.
[FIG. 8] FIG. 8 is an explanatory view showing an example where granularity of presence information is changed.
[FIG. 9] FIG. 9 is an explanatory view showing an example where granularity of presence information is changed.
[FIG. 10] FIG. 10 is an explanatory view showing an example where presence information is filtered.
[FIG. 11] FIG. 11 is an explanatory view showing a display example of presence information of another user using the information processing apparatus 100.
[FIG. 12] FIG. 12 is an explanatory view showing an output example of presence information of another user, the presence information being notified to the information processing apparatus 100.
[FIG. 13] FIG. 13 is an explanatory view showing an output example of presence information of another user, the presence information being notified to the information processing apparatus 100.
[FIG. 14] FIG. 14 is an explanatory view showing an output example of presence information of another user, the presence information being notified to the information processing apparatus 100.
[FIG. 15] FIG. 15 is an explanatory view showing an output example of presence information of another user, the presence information being notified to the information processing apparatus 100.
[FIG. 16] FIG. 16 is an explanatory view showing an output example of presence information of other plurality of users, the presence information being notified to the information processing apparatus 100.
[FIG. 17] FIG. 17 is an explanatory view showing an output example of presence information of other plurality of users, the presence information being notified to the information processing apparatus 100.
[FIG. 18] FIG. 18 is an explanatory view showing an output example of presence information of other plurality of users, the presence information being notified to the information processing apparatus 100.
[FIG. 19] FIG. 19 is an explanatory view showing an example of a GUI output by the information processing apparatus 100.
[FIG. 20] FIG. 20 is an explanatory view showing an example of a GUI output by the information processing apparatus 100.
[FIG. 21] FIG. 21 is an explanatory view showing an example of a GUI output by the information processing apparatus 100.
[FIG. 22] FIG. 22 is an explanatory view showing an example of a GUI output by the information processing apparatus 100.
[FIG. 23] FIG. 23 is an explanatory view showing an example of a GUI output by the information processing apparatus 100.
[FIG. 24] FIG. 24 is an explanatory view showing an example of a GUI for causing granularity of presence information to be opened to another person and an opening condition thereof to be set.
[FIG. 25] FIG. 25 is an explanatory view showing an example of a GUI for causing a user to input a setting for changing an amount of presence information.
[FIG. 26] FIG. 26 is an explanatory view showing an example of a GUI for causing a user to input a setting for changing an amount of presence information.
[FIG. 27] FIG. 27 is an explanatory view showing an example of a GUI used in a case where a user on a reception side requests opening of presence information.
[FIG. 28] FIG. 28 is an explanatory view showing an example of a GUI for causing a user on a transmission side to set whether to accept an opening request of presence information.
[FIG. 29] FIG. 29 is an explanatory view showing a hardware configuration example.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Embodiment of present disclosure
   1.1. Background
   1.2. Functional configuration example
   1.3. Operation example
2. Hardware configuration example
3. Conclusion

### <1. Embodiment of present disclosure>

### [1.1. Background]

First, a background of an embodiment of the present disclosure will be described before the embodiment of the present disclosure will be described in detail.

Various technologies for allowing a user to share information with another user on a social networking service (SNS) or the like have been proposed. The information to be shared by the user with another user is, for example, content such as a sentence, a still image, a moving image, and music. In an existing SNS, in a case where the user shares information with another user, generally, with which user or group information is shared is determined in advance and then a photograph and a sentence are posted to the SNS. That is, in an existing SNS, in a case where the user shares information with another user, the following setting is provided every time when the information is shared: a certain piece of information is opened to all users and another piece of information is opened only to a user set as a friend. As a matter of course, a setting for sharing is provided in advance and all pieces of information are shared on the basis of the setting for sharing in some cases. However, in a case where a certain piece of information is desired to be opened to all users, it is necessary to provide a setting for sharing the information again.

It is expected that devices for the purpose of being used while being worn on a body of a user, i.e., so-called wearable devices will be diffused in the future. Although the wearable devices have various forms such as an eye-glass type and a wrist-watch type, what is common is that screens of the wearable devices are generally small or no screen exists in the first place. For example, in a case where information obtained by the wearable device is shared with another user, it takes time and effort for the user to provide a setting for presenting each piece of the information. In the wearable device in particular, a screen size of a display is small or no display exists in many cases as described above, and therefore it is expected that, in a case where information is shared, it is difficult for the user to input a setting or the user cannot input a setting.

Further, in a case where information obtained by the wearable device is shared with another user, information that is not desired to be known to the other party is known if a setting for sharing is not appropriately provided. Thus, there is a risk that, although the user desires to protect privacy, the privacy cannot be protected. For example, in a case where the user desires to notify a family of information of a current position acquired by the wearable device but does not desire to notify a friend of the information, there is a risk that the information of the current position is also known to the friend if a setting for sharing is not appropriately performed.

In view of the above background, the disclosing parties of the present disclosure have diligently studied a technology capable of easily sharing information on a status of a user with the other party while securing privacy. As a result, the disclosing parties of the present disclosure have derived a technology capable of easily sharing information on a status of a user with the other party while securing privacy on the basis of a relationship with the other party with whom the information on the status of the user is to be shared.

Hereinabove, the background of the embodiment of the present disclosure has been described. Next, the embodiment of the present disclosure will be described in detail.

### [1.2. Configuration example]

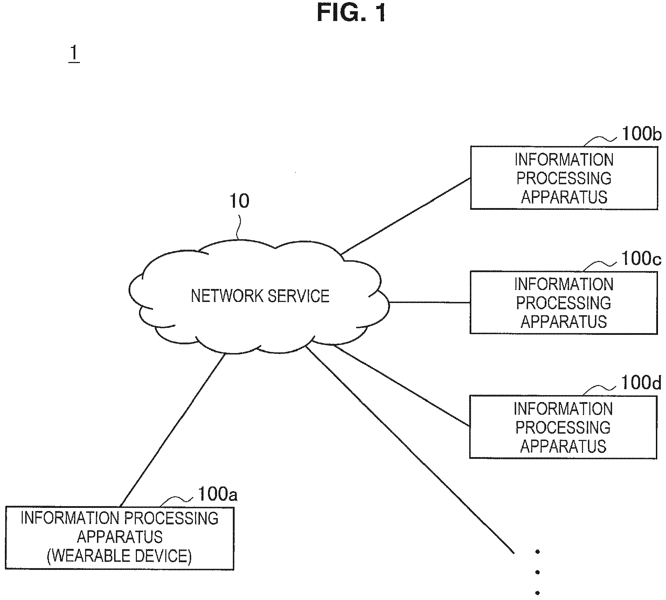

First, a configuration example of an information processing system according to an embodiment of the present disclosure will be described. FIG. 1 is an explanatory view showing a configuration example of an information processing system 1 according to an embodiment of the present disclosure.

The information processing system 1 shown in FIG. 1 is a system capable of sharing information on a status of a user (hereinafter, information on a status of a user will also be referred to as "presence information" in the present embodiment) with a plurality of users via a network service 10. Although content of the presence information will be described below, the presence information can include, for example, a current position of the user, current behavior of the user, and information of another user staying together with the user. As shown in FIG. 1, the information processing system 1 according to the embodiment of the present disclosure is configured to include a plurality of information processing apparatuses 100a, 100b, 100c, 100d, ... The information processing apparatuses 100a, 100b, 100c, 100d, ..., transmit/receive information via the network service 10 by communicating with the network service 10 via a wireless or wired network.

Hereinafter, description will be provided by assuming that the information processing apparatus 100a is an apparatus used by a user who desires to present presence information to other users and share the presence information with the other users and the other information processing apparatuses 100b, 100c, 100d, ... are apparatuses used by the other users and are apparatuses for receiving the presence information from the information processing apparatus 100a and outputting the presence information. As a matter of course, the number of information processing apparatuses for exchanging presence information via the network service 10 is not limited to the number of information processing apparatuses shown in FIG. 1. Further, hereinafter, in a case where it is unnecessary to differentiate the information processing apparatuses, the information processing apparatuses 100a, 100b, 100c, 100d, ... will be generally referred to simply as "information processing apparatuses 100".

The information processing apparatuses 100a, 100b, 100c, 100d, ... are electronic devices for treating digital data, such as a mobile phone, a smartphone (high-function mobile phone), a tablet type mobile terminal, a personal computer, a portable audio player, a game console, and a wearable device. As the wearable device, various forms such as an eye-glass type, a wrist-watch type, a head-mounted type, and other types of wearable devices are considered. However, the present disclosure is not limited to a particular form of a wearable device. In the present embodiment, description will be provided by assuming that the information processing apparatus 100a is an apparatus including a wearable device. As a matter of course, the information processing apparatus 100a used by the user who desires to present presence information to another user and share the presence information with the another user is not limited to a wearable device.

The information processing apparatus 100a acquires various types of information on the user wearing the information processing apparatus 100a by using a sensor or the like and processes the information into presence information. For example, the information processing apparatus 100a can process a current place of the user into presence information by acquiring latitude and longitude of the current place of the user with the use of the sensor and converting information of the latitude and longitude into a name of a place such as *"Shinjuku"* or "*Nanba*".

Then, in a case where the information processing apparatus 100a transmits the presence information to the other information processing apparatuses 100b, 100c, 100d, ..., the information processing apparatus 100a determines a degree of detail of the presence information on the basis of a relationship with a user serving as the other party, in particular, on the basis of a social relationship, a societal relationship, a professional relationship, or the like. In the present embodiment, this degree of detail will also be referred to as "granularity". The relationships described above encompass, for example, a parent and a child, friends, best friends, colleagues, a boss and a subordinate, classmates, a teacher and a student, a boyfriend and a girlfriend, and complete strangers (having no relationship). Note that friends in the relationships described above can encompass both a friend in a real world and a friend in a virtual world such as an SNS. Further, it can also be said that granularity of presence information herein is precision of presence information. That is, in a case where the user is at the *Shiujuku* station and the information processing apparatus 100a presents a place of the user to another user as presence information, the information processing apparatus 100a makes granularity of the presence information finer in a case where the information processing apparatus 100a notifies the another user of the place of the user in detail, such as "*Shiujuku* station", and makes the granularity of the presence information coarser in a case where the information processing apparatus 100a notifies the another user of the place of the user ambiguously, such as "*Shiujuku* ward" or "*Tokyo*".

In the present embodiment, the following pieces of presence information will be exemplified as presence information that can be shared with another user. However, the presence information that can be shared with another user is not limited to the following pieces of presence information.

The presence information that can be shared with another user can encompass behavior of the user and switching of the behavior of the user, activity of the user, a degree of tension of the user, surrounding sound of the user and a type of the surrounding sound, a degree of noise around the user, a place or position of the user, a position (distance and direction) relative to a position of another user, a scene around the user captured as an image by a camera, content of behavior of the user and switching of the behavior, an action and gesture of the user, a user staying together with the user, and a state of the information processing apparatus 100. As the state of the information processing apparatus 100, various states are considered, such as an on/off state of a power supply, a state in which a display is being operated, a state in which an earphone is being worn, and a state in which music is being reproduced.

In a case where the information processing apparatus 100a transmits presence information to the other information processing apparatuses 100b, 100c, 100d, ..., the information processing apparatus 100a determines granularity of the presence information on the basis of a relationship with a user serving as the other party. Therefore, it is possible to present the presence information to the user serving as the other party at ease without causing the user to set sharing each piece of the presence information.

Hereinabove, the configuration example of the information processing system 1 according to the embodiment of the present disclosure has been described with reference to FIG. 1. Next, a functional configuration example of the information processing apparatus 100 according to an embodiment of the present disclosure will be described.

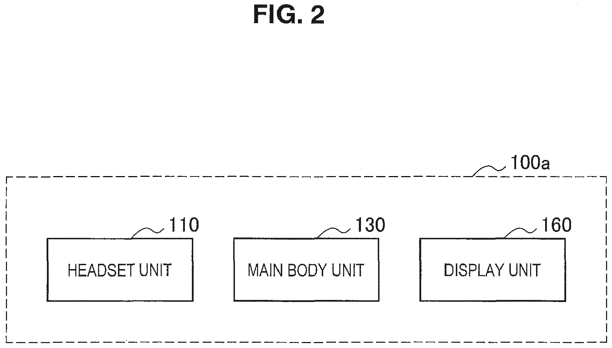

FIG. 2 is an explanatory view showing the functional configuration example of the information processing apparatus 100 according to the embodiment of the present disclosure. Description will be provided by assuming that the information processing apparatus 100 shown in FIG. 2 is a wearable device in which a plurality of devices function as a single apparatus. Hereinafter, the functional configuration example of the information processing apparatus 100 according to the embodiment of the present disclosure will be described with reference to FIG. 2.

As shown in FIG. 2, the information processing apparatus 100 according to the embodiment of the present disclosure is configured to include a headset unit 110, a main body unit 130, and a display unit 160.

The headset unit 110 is a device for the purpose of being worn on a head of the user. Although a functional configuration example of the headset unit 110 will be described below, the headset unit 110 is made up of, for example, a sensor for sensing movement of the head of the user, a camera for capturing an image of a field of view of the user, and a microphone for collecting an utterance of the user and surrounding sound.

The main body unit 130 is a device for exerting a main body function of the information processing apparatus 100. Although a functional configuration example of the main body unit 130 will be described below, the main body unit 130 is made up of, for example, a sensor for acquiring position information, a network interface for transmitting/receiving information to/from another apparatus, and an arithmetic logic unit for generating presence information.

The display unit 160 is a device including a display for presenting various types of information to the user. Although a functional configuration example of the display unit 160 will be described in detail, the display unit 160 is made up of the display for displaying information, a touchscreen for detecting a touch on the display, an LED device for presenting information, and the like.

Hereinabove, the functional configuration example of the information processing apparatus 100 according to the embodiment of the present disclosure has been described with reference to FIG. 2. Next, the functional configuration example of the headset unit 110 constituting the information processing apparatus 100 according to the embodiment of the present disclosure will be described.

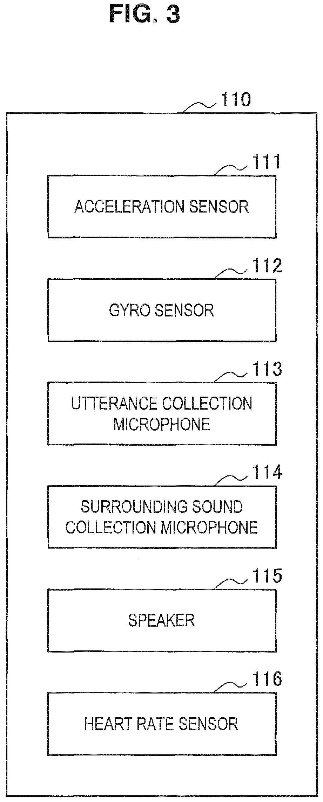

FIG. 3 is an explanatory view showing the functional configuration example of the headset unit 110 constituting the information processing apparatus 100 according to the embodiment of the present disclosure. Hereinafter, the functional configuration example of the headset unit 110 constituting the information processing apparatus 100 according to the embodiment of the present disclosure will be described with reference to FIG. 3.

As shown in FIG. 3, the headset unit 110 is configured to include an acceleration sensor 111, a gyro sensor 112, an utterance collection microphone 113, a surrounding sound collection microphone 114, a speaker 115, and a heart rate sensor 116.

The acceleration sensor 111 is a sensor for detecting acceleration of the headset unit 110. Further, the gyro sensor 112 is a sensor for detecting an angle and angular velocity of the headset unit 110. The acceleration sensor 111 and the gyro sensor 112 output changes in acceleration, angle, and angular velocity as individual pieces of sensing data to the main body unit 130 via an interface (not shown). Because the acceleration sensor 111 and the gyro sensor 112 detect the acceleration, the angle, and the angular velocity of the headset unit 110, the main body unit 130 can estimate how the headset unit 110 moves, i.e., how the head of the user wearing the headset unit 110 moves.

The utterance collection microphone 113 is a microphone for collecting content of an utterance of the user and is provided to position in the vicinity of, for example, a mouth of the user in a case where the headset unit 110 is worn on the user. Further, the surrounding sound collection microphone 114 is a microphone for collecting sound around the headset unit 110 and is provided to position in the vicinity of, for example, an ear of the user in a case where the headset unit 110 is worn on the user. The sound collected by the surrounding sound collection microphone 114 may be binaurally recorded.

In the present embodiment, the headset unit 110 includes two types of microphones, i.e., the utterance collection microphone 113 and the surrounding sound collection microphone 114 in order to separately collect content of an utterance of the user and sound around the headset unit 110. However, as a matter of course, the present disclosure is not limited to this example, and the headset unit 110 may include only a single microphone.

The speaker 115 is a speaker for outputting predetermined sound and outputs, for example, content of an utterance of another user transmitted from another information processing apparatus 100, notification sound for notifying the user, and a musical piece stored on the main body unit 130 or the like. The speaker 115 may be provided in a form of an earphone to be worn on an ear of the user.

The heart rate sensor 116 is a sensor for detecting a heart rate of the user wearing the headset unit 110. The heart rate sensor 116 may be provided in the vicinity of, for example, the speaker 115 of the headset unit 110. Because the heart rate sensor 116 detects the heart rate of the user, the main body unit 130 can acquire the heart rate of the user and determine a degree of tension described below on the basis of the heart rate of the user.

Hereinabove, the functional configuration example of the headset unit 110 constituting the information processing apparatus 100 according to the embodiment of the present disclosure has been described with reference to FIG. 3. Next, the functional configuration example of the main body unit 130 constituting the information processing apparatus 100 according to the embodiment of the present disclosure will be described.

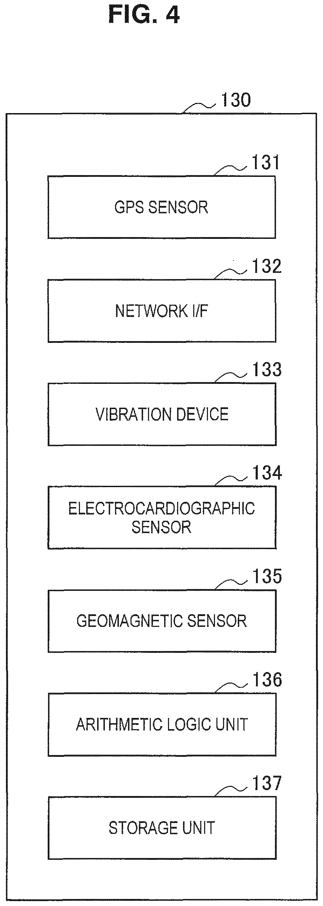

FIG. 4 is an explanatory view showing the functional configuration example of the main body unit 130 constituting the information processing apparatus 100 according to the embodiment of the present disclosure. Hereinafter, the functional configuration example of the main body unit 130 constituting the information processing apparatus 100 according to the embodiment of the present disclosure will be described with reference to FIG. 4.

As shown in FIG. 4, the main body unit 130 is configured to include a GPS sensor 131, a network I/F 132, a vibration device 133, an electrocardiographic sensor 134, a geomagnetic sensor 135, an arithmetic logic unit 136, and a storage unit 137.

The GPS sensor 131 is a sensor for detecting a current position of the main body unit 130. Note that, in the present embodiment, a GPS sensor is used as a sensor for acquiring a current position. However, instead of the GPS sensor, for example, a sensor for acquiring a current position, such as a global navigation satellite system (GLONASS), a BeiDou navigation satellite system (BDS), or iBeacon, may be used.

The network I/F 132 is an interface for mediating transmission/reception of information to/from another apparatus. In the present embodiment, the network I/F 132 mediates transmission/reception of information to/from another information processing apparatus 100 via the network service 10.

The vibration device 133 is a device for the purpose of notifying the user by using vibration. The vibration device 133 can notify the user of, for example, reception of a call, reception of a mail, a reply in an SNS, and transmission of presence information from another information processing apparatus 100 by using vibration.

The electrocardiographic sensor 134 is a sensor for detecting an electrocardiographic waveform of the user wearing the information processing apparatus 100. Because the electrocardiographic sensor 134 detects the electrocardiographic waveform of the user, the main body unit 130 can estimate an activity status of the user.

The geomagnetic sensor 135 is a sensor for detecting a direction of the main body unit 130. Because the geomagnetic sensor 135 detects the direction of the main body unit 130, the main body unit 130 can detect in which direction the user of the information processing apparatus 100 faces and determine a positional relationship with a user of another information processing apparatus 100.

The arithmetic logic unit 136 is made up of, for example, a central processing unit (CPU), a graphics processing unit (GPU), a read only memory (ROM), and a random access memory (RAM) and controls operation of the headset unit 110, the main body unit 130, and the display unit 160 constituting the information processing apparatus 100. Further, the arithmetic logic unit 136 estimates a status of the user by using sensing data transmitted from each sensor and generates presence information of the user. Further, in a case where the arithmetic logic unit 136 transmits the generated presence information to another information processing apparatus 100, the arithmetic logic unit 136 acquires a relationship with a user of the another information processing apparatus 100 from the storage unit 137 and determines granularity of the presence information by using the acquired relationship. Therefore, the arithmetic logic unit 136 can function as an example of an acquisition unit and a control unit in the present disclosure.

The storage unit 137 is made up of, for example, a ROM and a RAM and stores a computer program read out and executed by the arithmetic logic unit 136, various types of setting information, content output by the headset unit 110 and the display unit 160, and the like. For example, the storage unit 137 stores information of a relationship with another user, the information being used in a case where granularity of presence information is determined by the arithmetic logic unit 136.

Hereinabove, the functional configuration example of the main body unit 130 constituting the information processing apparatus 100 according to the embodiment of the present disclosure has been described with reference to FIG. 4. Next, a functional configuration example of the arithmetic logic unit 136 included in the main body unit 130 shown in FIG. 4 will be described.

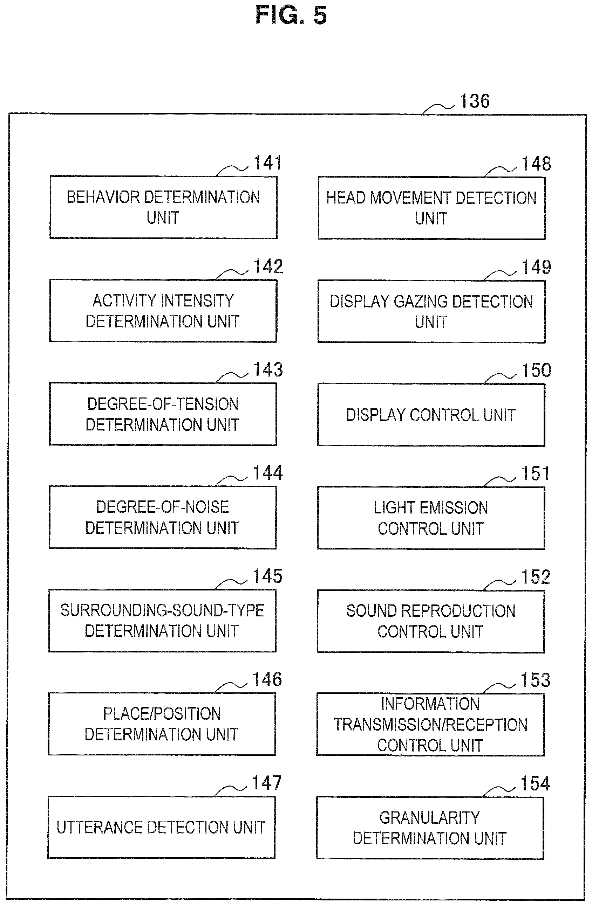

FIG. 5 is an explanatory view showing the functional configuration example of the arithmetic logic unit 136. Hereinafter, the functional configuration example of the arithmetic logic unit 136 will be described with reference to FIG. 5.

As shown in FIG. 5, the arithmetic logic unit 136 is configured to include a behavior determination unit 141, an activity intensity determination unit 142, a degree-of-tension determination unit 143, a degree-of-noise determination unit 144, a surrounding-sound-type determination unit 145, a place/position detection unit 146, an utterance detection unit 147, a head movement detection unit 148, a display gazing detection unit 149, a display control unit 150, a light emission control unit 151, a sound reproduction control unit 152, an information transmission/reception control unit 153, and a granularity determination unit 154.

The behavior determination unit 141 determines content of behavior of the user of the information processing apparatus 100. The behavior determination unit 141 determines behavior and switching to the behavior as the content of the behavior of the user. That is, the behavior determination unit 141 determines what the user of the information processing apparatus 100 is doing or what the user of the information processing apparatus 100 has started to do.

The behavior determination unit 141 can determine that the user of the information processing apparatus 100 is performing behavior such as walking, sitting, standing, or riding on a train on the basis of a value output from the acceleration sensor 111 or the gyro sensor 112. In a case where moving at a speed at which a human walks is found on the basis of a value output from the acceleration sensor 111, the behavior determination unit 141 can determine that the user of the information processing apparatus 100 is walking. In a case of determining behavior of the information processing apparatus 100, the behavior determination unit 141 may refer to a database in which values of the acceleration sensor 111 and the gyro sensor 112 and patterns of behavior are associated.

Further, the behavior determination unit 141 may determine content of behavior of the user of the information processing apparatus 100 by referring to schedule information of the user. For example, in a case where the user works a part-time job on a regular day or time and working the part-time job on the regular day or time is registered in the schedule information, the behavior determination unit 141 can determine whether or not the user is working the part-time job by referring to the schedule information. Note that the schedule information of the user may be held in the information processing apparatus 100 or may be held in an external server apparatus.

The activity intensity determination unit 142 determines an activity intensity of the user of the information processing apparatus 100. The activity intensity determination unit 142 determines a degree of movement of the user as the activity intensity of the user. In a case where, for example, the user is walking, the activity intensity determination unit 142 sets a walking speed as the activity intensity on the basis of a value output from the acceleration sensor 111 or the gyro sensor 112.

The degree-of-tension determination unit 143 determines a degree of tension of the user of the information processing apparatus 100. The degree-of-tension determination unit 143 detects a heart rate on the basis of the heart rate sensor 116 and combines the heart rate with determination results of the behavior determination unit 141 and the activity intensity determination unit 142, thereby determining the degree of tension of the user. For example, in a case where the heart rate is high in a state in which the activity intensity of the user is high, it is highly likely that the user takes exercises. Therefore, the degree-of-tension determination unit 143 can determine that the user is not quite tense. Further, for example, in a case where the heart rate is high in a state in which the activity intensity of the user is not high, the degree-of-tension determination unit 143 can determine that the user is tense.

The degree-of-noise determination unit 144 determines a degree of noise around the user of the information processing apparatus 100. The degree-of-noise determination unit 144 performs, for example, fast Fourier transform (FFT) on sound collected by the surrounding sound collection microphone 114 and analyzes a frequency component, thereby determining the degree of noise around the user of the information processing apparatus 100.

The surrounding-sound-type determination unit 145 determines which type of sound exists around the user of the information processing apparatus 100. The surrounding-sound-type determination unit 145 performs, for example, the FFT on sound collected by the surrounding sound collection microphone 114 and analyzes a frequency component, thereby determining a type of the sound on the basis of the frequency component. For example, the surrounding-sound-type determination unit 145 analyzes sound collected by the surrounding sound collection microphone 114 and determines surrounding sound such as sound of an automobile running, sound of music being played, sound of a human's voice around the user, and sound of being in a crowd.

The place/position detection unit 146 detects a current position or place of the user of the information processing apparatus 100, i.e., a current position or place of the main body unit 130. The place/position detection unit 146 acquires position information from, for example, the GPS sensor 131 and detects a current position. Further, if possible, the place/position detection unit 146 may acquire an image from a camera 164 included in the display unit 160 described below and specify a specific place (a name of a store or the like) or position (at a storefront, in a store, or the like).

The place/position detection unit 146 may detect not only a current position or place but also a relative position or direction of another user who shares presence information. A direction can be detected by the geomagnetic sensor 135, and therefore the place/position detection unit 146 can detect a relative direction of another user by using information of directions detected by the geomagnetic sensor 135 of the own apparatus and a geomagnetic sensor 135 of an information processing apparatus 100 of the another user.

The utterance detection unit 147 detects utterance of the user of the information processing apparatus 100. The utterance detection unit 147 detects utterance of the user of the information processing apparatus 100 by analyzing sound collected by the utterance collection microphone 113. Note that the utterance detection unit 147 can detect whether or not an utterance is produced by the user of the information processing apparatus 100 more accurately by analyzing not only sound collected by the utterance collection microphone 113 but also sound collected by the surrounding sound collection microphone 114, as compared to a case of analyzing only sound collected by the utterance collection microphone 113.

The head movement detection unit 148 detects movement of the head of the user of the information processing apparatus 100. The head movement detection unit 148 detects movement of the head of the user of the information processing apparatus 100 on the basis of sensing data obtained by the acceleration sensor 111 or the gyro sensor 112. The head movement detection unit 148 can detect movement such as tilting his/her head to one side and looking up at the sky as the movement of the head of the user.

The display gazing detection unit 149 detects a degree in which the user of the information processing apparatus 100 gazes at the display unit 160. The display gazing detection unit 149 acquires an image from the camera 164 included in the display unit 160 described below and detects whether or not the user of the information processing apparatus 100 watches the display unit 160.

The display control unit 150 performs display control with respect to the display provided in the display unit 160. The light emission control unit 151 performs light emission control of the LED device provided in the display unit 160. The sound reproduction control unit 152 performs output control of sound with respect to the speaker 115 provided in the headset unit 110. The information transmission/reception control unit 153 performs control of transmission/reception of information via the network I/F 132.

In a case of presenting presence information to another user, the granularity determination unit 154 determines granularity of the presence information. In a case of determining the granularity of the presence information, the granularity determination unit 154 uses a relationship between the user of the information processing apparatus 100 and another user. Because the granularity determination unit 154 uses the above relationship in a case of determining the granularity of the presence information, it is unnecessary to set granularity of each piece of the presence information in a case where the user presents the presence information to another user. Thus, it is possible to easily present the presence information to the another user while protecting privacy. Further, in a case of determining the granularity of the presence information, the granularity determination unit 154 may refer to not only the information of the relationship but also a status of the information processing apparatus 100 and information of the user who uses the information processing apparatus 100. Further, in a case of determining the granularity of the presence information, the granularity determination unit 154 may use not only the information of the relationship but also current position information of the information processing apparatus 100 or current position information of the other party to which the presence information is to be presented. Granularity determination processing of presence information performed by the granularity determination unit 154 will be described in detail below.

Hereinabove, the functional configuration example of the arithmetic logic unit 136 has been described with reference to FIG. 5. Next, the functional configuration example of the display unit 160 constituting the information processing apparatus 100 according to the embodiment of the present disclosure will be described.

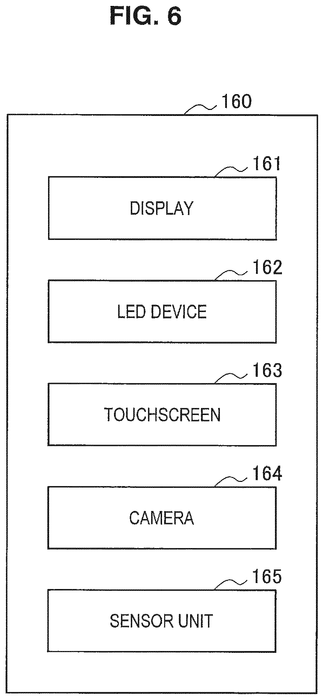

FIG. 6 is an explanatory view showing the functional configuration example of the display unit 160 constituting the information processing apparatus 100 according to the embodiment of the present disclosure. Hereinafter, the functional configuration example of the display unit 160 constituting the information processing apparatus 100 according to the embodiment of the present disclosure will be described with reference to FIG. 6.

As shown in FIG. 6, the display unit 160 is configured to include a display 161, an LED device 162, a touchscreen 163, the camera 164, and a sensor unit 165.

The display 161 is a display for displaying information and is made up of, for example, a liquid crystal display or an organic electroluminescence display. Display on the display 161 is controlled by the display control unit 150 described above. The touchscreen 163 is provided in the display 161. The user can operate a graphical user interface (GUI) presented by the display 161 by operating the touchscreen 163.

The LED device 162 is a device for notifying the user by using light emission. Light emission of the LED device 162 is controlled by the light emission control unit 151 described above.

The camera 164 is a camera for capturing an image of surroundings of the display unit 160 and is a camera including a CCD image sensor, a CMOS image sensor, or the like as an image capturing element. The main body unit 130 can detect a scene around the user, a state in which the user gazes at the display 161, and the like by analyzing an image captured by the camera 164.

Hereinabove, the functional configuration example of the display unit 160 constituting the information processing apparatus 100 according to the embodiment of the present disclosure has been described with reference to FIG. 6.

The information processing apparatus 100 according to the embodiment of the present disclosure has the configuration described above, and therefore, in a case where the user presents presence information to another user, it is unnecessary to set granularity of each piece of the presence information. Thus, it is possible to easily present the presence information to the another user while protecting privacy.

Note that each sensor described above may be provided in another device that is not the exemplified device. For example, the GPS sensor 131 and the geomagnetic sensor 135 may be provided in the headset unit 110, instead of the main body unit 130.

### [1.3. Operation example]

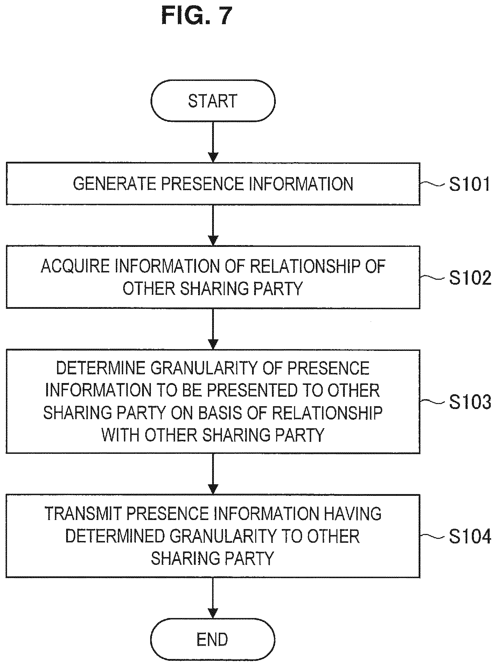

Next, an operation example of the information processing apparatus 100 according to the embodiment of the present disclosure will be described. FIG. 7 is a flowchart showing the operation example of the information processing apparatus 100 according to the embodiment of the present disclosure. FIG. 7 shows the operation example of the information processing apparatus 100 performed in a case of determining granularity of presence information to be presented to another information processing apparatus 100 and transmitting the presence information to the another information processing apparatus 100. Hereinafter, the operation example of the information processing apparatus 100 according to the embodiment of the present disclosure will be described with reference to FIG. 7.

In a case of transmitting presence information to another information processing apparatus 100, first, the information processing apparatus 100 generates presence information to be transmitted (Step S101). Generation of the presence information in Step S101 is executed by the arithmetic logic unit 136. The arithmetic logic unit 136 generates presence information of the user on the basis of information of various sensors and the like included in the information processing apparatus 100.

When the information processing apparatus 100 generates the presence information in Step S101, then the information processing apparatus 100 acquires information of the other sharing party to which the presence information is to be presented (Step S102). Acquisition of information of a relationship of the other sharing party in Step S102 is executed by the arithmetic logic unit 136. The information of the relationship of the other sharing party is stored on, for example, the storage unit 137.

In a case where the information processing apparatus 100 acquires the information of the relationship of the other sharing party to which the presence information is to be presented in Step S102, then the information processing apparatus 100 determines granularity of the presence information to be presented to the other sharing party on the basis of the relationship of the other sharing party (Step S103). Determination of the granularity of the presence information in Step S103 is executed by the arithmetic logic unit 136, specifically, by the granularity determination unit 154. Determination processing of the granularity of the presence information in Step S103 will be described in detail below.

In a case where the information processing apparatus 100 determines the granularity of the presence information to be presented to the other sharing party in Step S103, then the information processing apparatus 100 transmits the presence information having the determined granularity to an information processing apparatus 100 of the other sharing party (Step S104). Transmission of the presence information in Step S104 is executed by the arithmetic logic unit 136, specifically, by the information transmission/reception control unit 153.

The information processing apparatus 100 executes the operation shown in FIG. 7, and therefore, in a case where the user presents the presence information to another user, it is unnecessary to set granularity of each piece of the presence information. Thus, it is possible to easily present the presence information to the another user while protecting privacy.

Next, the determination processing of granularity of presence information in Step S103 will be described in detail. In the present embodiment, the information processing apparatus 100 determines granularity of presence information to be transmitted to an information processing apparatus 100 of the other sharing party on the basis of a relationship with the other sharing party as described above.

As the relationship with the other sharing party, for example, there are considered relationships with a parent, a brother/sister, a husband or wife, a child, a grandfather/grandmother, a grandchild, a boyfriend/girlfriend, a best friend, a friend, a local friend, an acquaintance, a colleague at a company, and a mate in a club. Hereinafter, presence information to be opened to the other sharing party and granularity of the presence information will be exemplified regarding each of the relationships cited herein.

### (Case where the other party is parent)

For example, in a case where information of a current position obtained from information of latitude and longitude acquired by the GPS sensor 131 is presented to a parent as presence information, the information processing apparatus 100 presents presence information in which the information of the latitude and longitude acquired by the GPS sensor 131 is converted into information such as "school" or "part-time job place", instead of presenting detailed position information obtained from the information of the latitude and longitude acquired by the GPS sensor 131.

### (Case where the other party is brother or sister)

For example, in a case where information of a person staying together with the user is presented to a brother or sister as presence information, the information processing apparatus 100 presents presence information at granularity only indicating a relationship of the person staying together with the user, instead of presenting a specific personal name.

### (Case where the other party is wife or husband)

For example, in a case where information of behavior or switching of the behavior determined by the behavior determination unit 141 is presented to a wife or husband as presence information, the information processing apparatus 100 presents only detailed position information such as having left a company at the time of leaving the company, having got into a train, having got off the train, and in which point between the nearest station and home the user is walking.

### (Case where the other party is child or grandchild)

For example, in a case where information of a current position obtained from information of latitude and longitude acquired by the GPS sensor 131 is presented to a child or grandchild as presence information, the information processing apparatus 100 presents the presence information at granularity such as "staying home" or "being outside", instead of presenting detailed position information.

### (Case where the other party is boyfriend/girlfriend)

For example, in a case where presence information is presented to a boyfriend/girlfriend, the information processing apparatus 100 presents all types of presence information in detail (at the finest granularity). For example, in a case where information of behavior is presented as presence information, the information processing apparatus 100 presents the presence information at granularity at which a change in behavior, such as a time when the user gets up in the morning or a time when the user gets into a train, is notified by using sound or vibration, instead of merely displaying current behavior on a display of the other party.

### (Case where the other party is best friend)

For example, in a case where surrounding sound determined by the surrounding-sound-type determination unit 145 is presented to a best friend as presence information and when music is played in a café, a shop, or the like, the information processing apparatus 100 shares only the music with the best friend and does not present the surrounding sound itself to the other party other than the best friend.

### (Case where the other party is friend)

For example, in a case where information of behavior determined by the behavior determination unit 141 is presented to a friend as presence information, the information processing apparatus 100 presents the presence information at granularity indicating that the user is moving, is in class, is working a part-time job, or is doing a club activity.

### (Case where the other party is local friend)

For example, in a case where information of a current position obtained from information of latitude and longitude acquired by the GPS sensor 131 is presented to a local friend as presence information, the information processing apparatus 100 presents the presence information at coarse granularity such as *"Tokyo"* usually in a period in which the user stays away from a local area but presents the presence information in detail at granularity such as "OO shopping center" only when the user returns to the local area on vacation or the like.

### (Case where the other party is acquaintance)

For example, in a case where the other party is an acquaintance who is not so close, i.e., the other party and the user are on nodding terms with each other, the information processing apparatus 100 presents only an on/off state of the power supply and presents no other piece of presence information.

### (Case where the other party is colleague at company)

For example, in a case where information of a current position obtained from information of latitude and longitude acquired by the GPS sensor 131 is presented to a colleague at a company as presence information, the information processing apparatus 100 presents the information in detail at fine granularity, such as "Own desk", "The O-th floor", or "Meeting room OO", in a case where the user is in the company and presents the information at coarse granularity, such as "Home" or "Outside", in a case where the user is outside the company.

### (In a case where the other party is mate in club)

For example, in a case where a state of behavior determined by the behavior determination unit 141 is presented to a mate in a club as presence information, the information processing apparatus 100 presents the presence information at coarse granularity such as "Jogging" and "Not jogging".

The information processing apparatus 100 according to the embodiment of the present disclosure can determine granularity of presence information of the user in accordance with a relationship with the other sharing party and open the presence information of the user to the other sharing party in an appropriate form as described above. Therefore, the information processing apparatus 100 according to the embodiment of the present disclosure does not need to set granularity every time when the user presents presence information to another person and enables presentation of presence information of the user which secures privacy of the user.

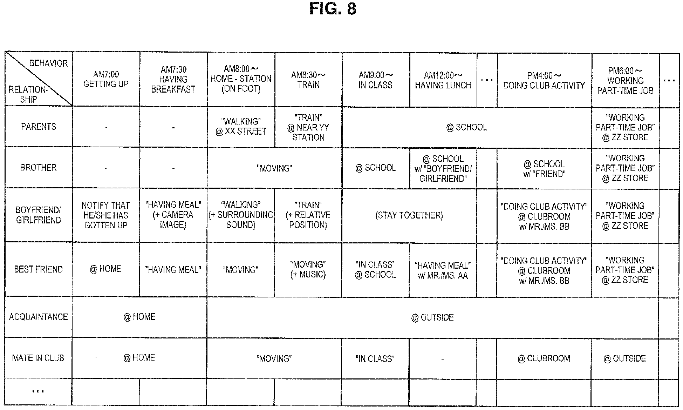

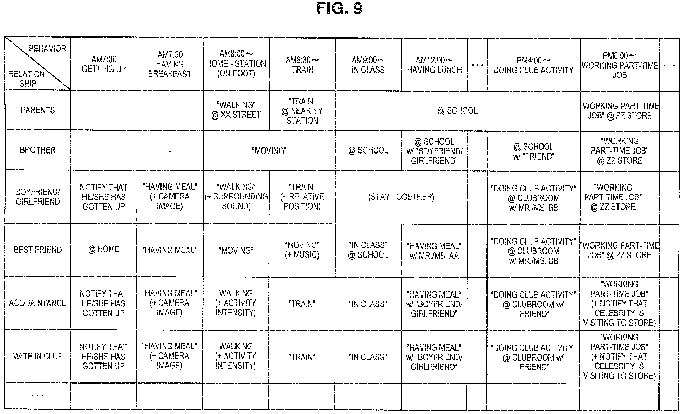

FIGS. 8 and 9 are explanatory views showing examples where presence information to be opened to the other sharing party and granularity of the presence information to be opened are changed in accordance with a relationship with the other sharing party.

FIG. 8 shows behavior of a user of a certain information processing apparatus 100 in time series and shows an example showing how the information processing apparatus 100 presents presence information to the other party regarding each type of behavior.

In a case where the user gets up at seven in the morning and the information processing apparatus 100 detects getting up of the user, the information processing apparatus 100 notifies a boyfriend/girlfriend that the user has got up and gives notification to a best friend, an acquaintance, and a mate in a club at granularity indicating that the user stays home. Note that getting up of the user can be detected on the basis of, for example, generation of a trigger such as the user having operated the information processing apparatus 100. Meanwhile, parents and a brother who live with the user know that the user stays home, and therefore the information processing apparatus 100 notifies the parents and brother of nothing when the user gets up.

In a case where the user eats breakfast at seven thirty in the morning and the information processing apparatus 100 detects the user having breakfast, the information processing apparatus 100 presents the user having a meal together with a video that shows the user having the meal to the boyfriend/girlfriend, presents only the user having a meal to the best friend, and gives notification to the acquaintance and the mate in the club at granularity indicating that the user stays home. Note that whether or not the user is having a meal can be detected on the basis of, for example, generation of a trigger such as operation of the information processing apparatus 100 by the user. Meanwhile, the parents and brother who live with the user know that the user stays home, and therefore the information processing apparatus 100 notifies the parents and brother of nothing when the user gets up.

When the user leaves home at eight in the morning and while the user is heading for a station nearest to home, the information processing apparatus 100 detects the user having left home and heading for the station nearest to home. In this case, the information processing apparatus 100 presents not only behavior of walking but also a detailed place to the parents. Further, the information processing apparatus 100 performs presentation to the brother, the best friend, and the mate in the club at granularity indicating that the user is moving. Further, the information processing apparatus 100 presents not only behavior of walking but also collected surrounding sound to the boyfriend/girlfriend. Further, the information processing apparatus 100 performs presentation to the acquaintance at granularity merely indicating that the user is outside the home.

When the user rides on a train at eight thirty in the morning and while the user is heading for school, the information processing apparatus 100 detects the user having ridden on the train and heading for school. In this case, the information processing apparatus 100 presents not only behavior of riding on the train but also a detailed place to the parents. Further, the information processing apparatus 100 performs presentation to the brother, the best friend, and the mate in the club at granularity indicating that the user is moving. Further, the information processing apparatus 100 presents not only behavior of riding on the train but also a position relative to a position of the boyfriend/girlfriend to the boyfriend/girlfriend. Further, the information processing apparatus 100 performs presentation to the acquaintance at granularity merely indicating that the user is outside the home.

While the user is taking lessons from nine in the morning, the information processing apparatus 100 detects the user taking lessons. In this case, the information processing apparatus 100 performs presentation to the parents and brother at granularity indicating that the user is in the school. Further, the information processing apparatus 100 performs presentation to the best friend and the mate in the club at granularity indicating that the user is in class. Further, the information processing apparatus 100 does not notify the boyfriend/girlfriend of nothing in particular because it is considered that the user is near the boyfriend/girlfriend. Further, the information processing apparatus 100 performs presentation to the acquaintance at granularity merely indicating that the user is outside the home.

While the user is having lunch from noon, the information processing apparatus 100 detects the user having lunch. In this case, the information processing apparatus 100 performs presentation to the parents and brother at granularity indicating that the user is in the school and further presents the user staying together with the boyfriend/girlfriend to the brother. Further, the information processing apparatus 100 presents not only the user having a meal but also a name of the boyfriend/girlfriend staying together with the user to the best friend. Further, the information processing apparatus 100 does not notify the boyfriend/girlfriend of nothing in particular because it is considered that the user is near the boyfriend/girlfriend. Further, the information processing apparatus 100 performs presentation to the acquaintance at granularity merely indicating that the user is outside the home. Further, the information processing apparatus 100 presents nothing to the mate in the club.

While the user is doing a club activity from four in the afternoon, the information processing apparatus 100 detects the user doing the club activity. Note that whether or not the user is doing the club activity can be detected by the information processing apparatus 100 referring to schedule information of the user. In this case, the information processing apparatus 100 performs presentation to the parents and brother at granularity indicating that the user is in the school and further presents the user staying together with a friend to the brother. Further, the information processing apparatus 100 presents not only the user doing the club activity in a clubroom but also a name of a person staying together with the user to the boyfriend/girlfriend and the best friend. Further, the information processing apparatus 100 presents the user being in the clubroom to the mate in the club. Further, the information processing apparatus 100 performs presentation to the acquaintance at granularity merely indicating that the user is outside the home.

While the user is working a part-time job from six in the afternoon, the information processing apparatus 100 detects the user working the part-time job. Note that whether or not the user is working the part-time job can be detected by the information processing apparatus 100 referring to the schedule information of the user. In this case, the information processing apparatus 100 presents not only the user working the part-time job but also a name of a store to the parents, the brother, the boyfriend/girlfriend, and the best friend. Further, the information processing apparatus 100 performs presentation to the acquaintance and the mate in the club at granularity indicating that the user is outside.

As described above, in a case where the user can be in various statuses over time, the information processing apparatus 100 can detect content of behavior of the user and present presence information in an appropriate form in accordance with a relationship with the other party to which the presence information is to be presented and the content of the behavior of the user.

The information processing apparatus 100 can cause the user to collectively set at which granularity presence information is opened in accordance with a relationship with the other party. For example, the information processing apparatus 100 may collectively change settings in accordance with a request as to whether or not the user desires to present presence information in detail. The above request from the user may be caused by, for example, a difference in a degree of a behavioral property of the user. For example, in a case where the user instructs the information processing apparatus 100 to collectively change settings to settings in which presence information is presented at fine granularity, i.e., is presented in detail because the user desires to open being extremely sprightly or active to another user, the information processing apparatus 100 may collectively change the settings to the settings in which presence information is presented in detail. Meanwhile, for example, in a case where the user instructs the information processing apparatus 100 to collectively change settings to settings in which presence information is presented at coarse granularity because the user does not desire to open being sprightly or active to another user, the information processing apparatus 100 may collectively change the settings to the settings in which presence information is presented at coarse granularity.

FIG. 9 shows behavior of a user of a certain information processing apparatus 100 in time series and shows an example showing how the information processing apparatus 100 presents presence information to the other party regarding each type of behavior. In addition, FIG. 9 shows that granularity of opening of presence information to an acquaintance and a mate in a club is collectively changed from the granularity shown in FIG. 8 on the basis of a setting regarding activity of the user.

That is, in the example shown in FIG. 9, the information processing apparatus 100 is set so that presence information is presented in detail to the acquaintance and the mate in the club. As described above, the information processing apparatus 100 can collectively change granularity of presence information to be presented in accordance with a setting.

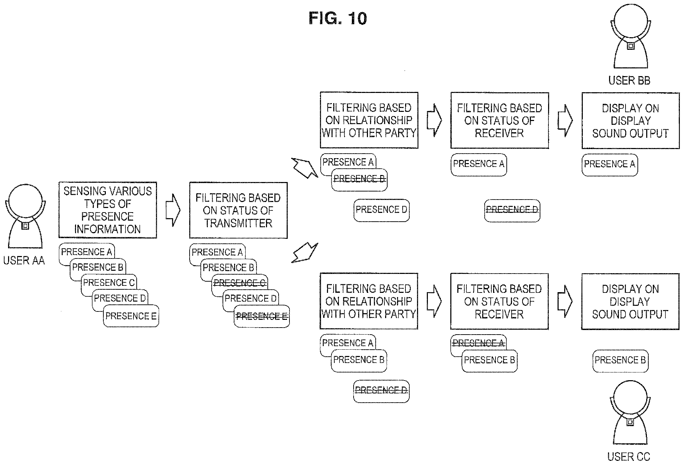

Filtering may be performed in various places until presence information of a certain user (for example, user A) arrives at another user (for example, user B or user C). FIG. 10 is an explanatory view showing an example where presence information is filtered in various places.

For example, as shown in FIG. 10, in a case where five types of presence information of the user A are generated by sensing, the five types of presence information can be filtered on the basis of a status of a transmitter. In the example shown in FIG. 10, two pieces of presence information are cut on the basis of the status of the transmitter. Filtering of presence information on the basis of a status of a transmitter will be described in detail below.

The presence information filtered on the basis of the status of the transmitter can be further filtered on the basis of relationships with the other parties. In the example shown in FIG. 10, different pieces of presence information are cut on the basis of the relationships with the other parties.

The presence information filtered on the basis of the relationships with the other parties can be further filtered on the basis of statuses of the other parties (receivers). In the example shown in FIG. 10, a single piece of presence information is cut on the basis of the status of each of the receivers. Filtering of presence information on the basis of a status of a receiver will be described in detail below. Filtering of presence information in the information processing apparatus 100 on the reception side may be performed by, for example, the display control unit 150.

Finally, different pieces of presence information are transmitted to the other parties. In the example shown in FIG. 10, presence information A and presence information B are transmitted to the user B and the user C, respectively, and are presented in the information processing apparatuses 100 of the respective users.

Next, how presence information that the information processing apparatus 100 presents to another information processing apparatus 100 is displayed on the another information processing apparatus 100 will be described.

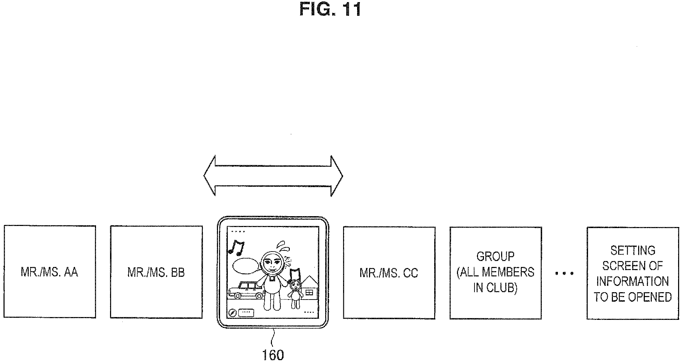

FIG. 11 is an explanatory view showing a display example of presence information of another user using the information processing apparatus 100 and is an explanatory view showing an example of a state in which presence information of another user is displayed on the display unit 160.

In FIG. 11, presence information of another certain user is displayed on the display unit 160, and the user of the information processing apparatus 100 can switch display to display of presence information of another user by operating, for example, the touchscreen 163. Further, the information processing apparatus 100 may display, on the display unit 160, presence information of a group including a plurality of users, instead of presence information of a single user, on the basis of the user operation.

Further, the information processing apparatus 100 may display a setting screen for setting opening of presence information on the basis of the user operation. This setting screen is a screen for checking how presence information of the user is displayed on the other side and causing the user to set permission/non-permission of opening of various types of information included in presence information and granularity of opening.

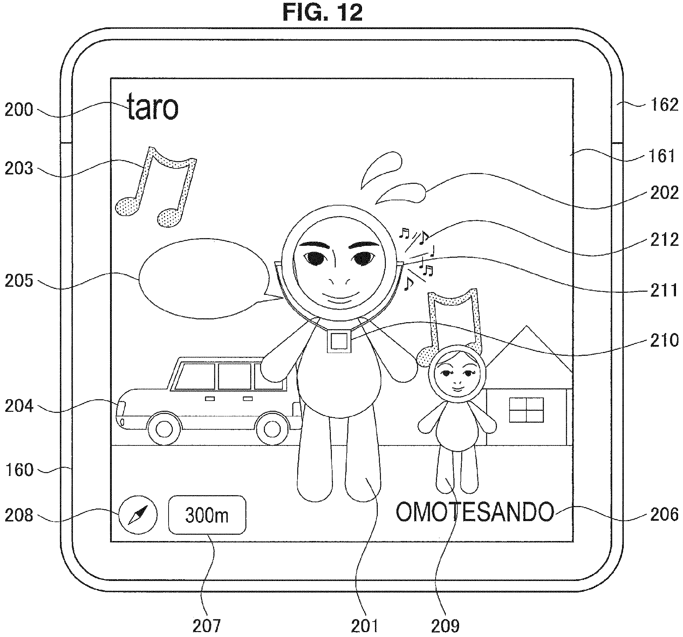

FIG. 12 is an explanatory view showing an output example of presence information of another user, the presence information being notified to the information processing apparatus 100. FIG. 12 shows a case where presence information of another user is output to the display unit 160 of the information processing apparatus 100.

In a case where the information processing apparatus 100 outputs presence information of another user, for example, the information processing apparatus 100 displays name information 200 indicating a name of the user on the display 161 of the display unit 160.

For example, in a case where behavior of another user and switching thereof are presented as presence information of the user, the information processing apparatus 100 displays an avatar 201 whose movement is changed on the basis of behavior on the display 161 of the display unit 160. The information processing apparatus 100 may notify the user of switching of behavior of another user by using, for example, sound or vibration.

For example, in a case where an activity intensity of another user is presented as presence information of the user, the information processing apparatus 100 changes a speed of movement of the avatar 201 and displays the avatar 201 on the display 161 of the display unit 160.

For example, in a case where a degree of tension of another user is presented as presence information of the user, the information processing apparatus 100 displays an illustration 202 like a bead of sweat around a face of the avatar 201 on the display 161 of the display unit 160, the number of which is determined in accordance with the degree of tension. In a case where the user is not tense, the information processing apparatus 100 displays no illustration 202 on the display unit 160.

For example, in a case where surrounding sound of another user is presented as presence information of the user, the information processing apparatus 100 outputs, for example, sound that the user hears from the speaker 115. Further, in a case where a type of surrounding sound of another user is presented as presence information of the user, animation and the like showing that an illustration 203 of a musical note drifts in a background and an illustration 204 of an automobile passes may be displayed on the display 161 of the display unit 160.

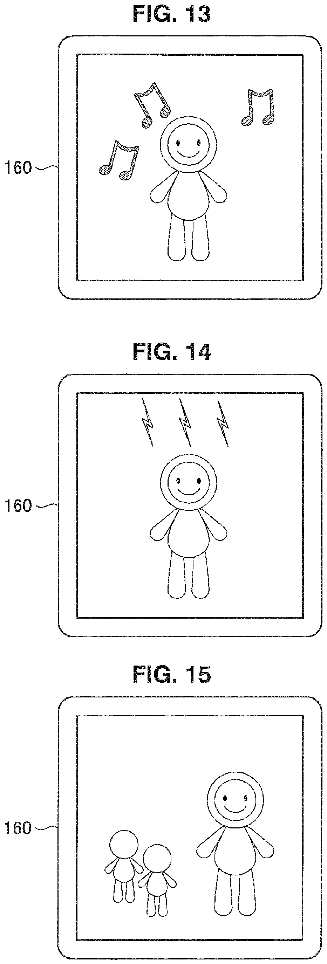

FIG. 13 is an explanatory view showing an output example of presence information of another user, the presence information being notified to the information processing apparatus 100. In a case where music is being played around another user, as shown in, for example, FIG. 13, the information processing apparatus 100 may perform display on the display 161 so that a musical note mark drifts in a background of the avatar 201 of another user. The number of musical note marks may be increased/decreased or a size thereof may be changed in accordance with volume of the music, and a speed at which the musical note mark drifts may be changed or how the musical note mark swings may be changed in accordance with a tempo of the music.

For example, in a case where a degree of noise (volume of surrounding sound) around another user is presented as presence information of the user, the information processing apparatus 100 may express the degree of noise by using, for example, a frequency at which an illustration 205 of a balloon displayed on the display 161 of the display unit 160 drifts or a size thereof.

FIG. 14 is an explanatory view showing an output example of presence information of another user, the presence information being notified to the information processing apparatus 100. In a case where there is a loud noise around another user, as shown in, for example, FIG. 14, the information processing apparatus 100 may perform display on the display 161 so that a lightning mark appears in a background of the avatar 201 of another user. The number of lightning marks may be increased/decreased or a size thereof may be changed in accordance with volume of the noise.

FIG. 15 is an explanatory view showing an output example of presence information of another user, the presence information being notified to the information processing apparatus 100. In a case where a plurality of people exist around another user, as shown in, for example, FIG. 15, the information processing apparatus 100 may perform display on the display 161 so that a plurality of other small avatars appear in a background of the avatar 201 of another user. The number of small avatars may be increased/decreased or activeness of movement thereof may be changed in accordance with volume of conversation.

For example, in a case where a place or position of another user is presented as presence information of the user, the information processing apparatus 100 may display the place or position as the background of the avatar 201 on the display 161 or may display the place as text 206 on the display 161.

For example, in a case where a relative position (distance or direction) of another user is presented as presence information of the user, the information processing apparatus 100 may display a distance information 207 from the user on the display 161 or may display a relative direction on the display 161 by using a compass 208.

For example, in a case where an image (still image or moving image) of surroundings of another user is presented as presence information of the user, the information processing apparatus 100 may display the image on the display 161 as the background of the avatar 201.

For example, in a case where another user producing an utterance is presented as presence information of the user, the information processing apparatus 100 may display the illustration 205 of the balloon at a position of a mouth of the avatar 201 on the display 161.

For example, in a case where an action or gesture of another user is presented as presence information of the user, the information processing apparatus 100 may reflect the action or gesture in movement of the avatar 201 as animation and display the action or gesture on the display 161. When the user gives a response, the information processing apparatus 100 may cause the LED device 162 to emit light every time when the user gives a response, and, when the user tilts his/her head to one side, the information processing apparatus 100 may cause the LED device 162 to flicker in accordance with such movement.

For example, in a case where information of a person staying together with another user is presented as presence information of the user, the information processing apparatus 100 may display an avatar 209 that is one size smaller than the avatar 201 near the avatar 201 on the display 161.

For example, in a case where a state of an information processing apparatus 100 used by another user is presented as presence information of the user, the information processing apparatus 100 may display an on/off state of a power supply on the display 161. Further, in a case where the power supply of the information processing apparatus 100 of the user is off, nothing but the name information 200 is displayed on the display 161.

Further, in a case where the user is operating the display unit 160 of the information processing apparatus 100, the information processing apparatus 100 may change a device 210 that the avatar 201 wears and display the device on the display 161.

Further, in a case where the user attaches an earphone to the information processing apparatus 100 and wears the earphone, the information processing apparatus 100 may perform display on the display 161 so that an illustration 211 of an earphone is added to the avatar 201.

Further, in a case where the user is listening to music through the earphone, the information processing apparatus 100 may perform display on the display 161 so that the illustration 211 of the earphone is added to the avatar 201 and then a musical note mark is superimposed on the illustration 211 of the earphone.

As described above, in a case where the information processing apparatus 100 outputs presence information of another user, the information processing apparatus 100 displays an avatar and an illustration on the display 161 or causes the LED device 162 to emit light. Therefore, it is possible to intelligibly present the presence information of the another user to the user.

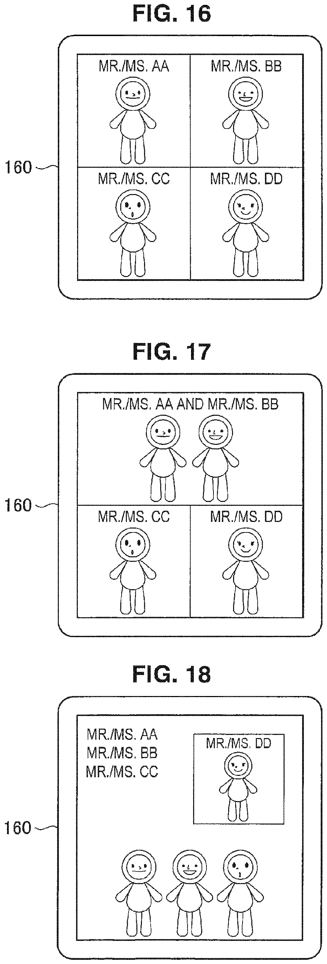

The information processing apparatus 100 may simultaneously output presence information of a group composed of a plurality of users. FIGS. 16 to 18 are explanatory views showing output examples of presence information of a group composed of a plurality of other users, the presence information being notified to the information processing apparatus 100. FIG. 16 shows an output example where, in a case where the information processing apparatus 100 outputs presence information of a group composed of four users, a screen display is divided into four sections and the presence information is output. Further, FIG. 17 shows an output example where, in a case where the information processing apparatus 100 outputs presence information of a group composed of four users, pieces of presence information of users staying together are collectively output. Further, FIG. 17 shows an output example where, in a case where the information processing apparatus 100 outputs presence information of a group composed of four users and almost all users stay together, pieces of presence information of those users are collectively output and presence information of a user who is not staying with the users is output in a different frame.

As described above, the information processing apparatus 100 may simultaneously output presence information of a plurality of people, instead of a single person, and can select various output forms of the presence information of the plurality of people.

The information processing apparatus 100 may transmit presence information of the user to another user only when the user performs particular behavior or, on the contrary, may transmit no presence information of the user to another user only when the user performs particular behavior.

For example, the information processing apparatus 100 may share information of behavior with the other party only while the user is touching information of the other party on an SNS. Further, for example, the information processing apparatus 100 may share no surrounding sound while the user is having a conversation with someone in a real world. Further, for example, the information processing apparatus 100 may open a current position in detail only while the user is jogging. Further, for example, the information processing apparatus 100 may share who stays together with the user with the other party only when the user mentions a name of the other party. Further, for example, no presence information may be shared when the user stays with a boyfriend/girlfriend. Further, for example, the information processing apparatus 100 may share a gesture such as nodding or tilting his/her head to one side with the other party only while the user is on a voice call using the information processing apparatus 100.

The information processing apparatus 100 may transmit presence information of the user to another user only when the user is in a particular place or, on the contrary, may transmit no presence information of the user to another user only when the user is in a particular place.

For example, the information processing apparatus 100 may share surrounding sound with the other party only when the user and the other sharing party exist within a predetermined range. Further, for example, the information processing apparatus 100 may open no information of behavior to another user when the user stays home.

The information processing apparatus 100 may transmit presence information of the user to another user only when the user performs particular operation or, on the contrary, may transmit no presence information of the user to another user only when the user performs particular operation.

For example, the information processing apparatus 100 may open no presence information to another user while the user is reproducing music in the information processing apparatus 100.

The information processing apparatus 100 may transmit presence information of the user to another user only when the information processing apparatus 100 enters a particular state or, on the contrary, may transmit no presence information of the user to another user only when the information processing apparatus 100 enters a particular state.

For example, the information processing apparatus 100 may share no activity intensity when a communication line becomes unstable. Further, for example, the information processing apparatus 100 may share no surrounding sound when a remaining battery is low.

The information processing apparatus 100 may transmit presence information of the user to another user in a particular period of time or, on the contrary, may transmit no presence information of the user to another user in a particular period of time. For example, the information processing apparatus 100 may open no information of a person staying together with the user at night.

On the contrary, an information processing apparatus 100 that accepts presence information may change granularity or an output form of the presence information in accordance with a user who accepts the presence information or a status of the information processing apparatus 100.

For example, although the information processing apparatus 100 usually displays no presence information of another person, the information processing apparatus 100 may accept all presence information of the other party and output the presence information only while the user is touching information of the person on an SNS. Further, for example, the information processing apparatus 100 may turn off light emission of the display 161 and the LED device 162 while the user is having a conversation with someone in a real world. Further, for example, the information processing apparatus 100 may receive only music-type surrounding sound from another information processing apparatus 100 and reproduce the surrounding sound only while the user is jogging. Further, for example, the information processing apparatus 100 may output an activity intensity of the other party only when the user mentions a name of the other party. Further, for example, the information processing apparatus 100 may receive no presence information when the user stays together with a boyfriend/girlfriend. Further, for example, the information processing apparatus 100 may output a gesture such as nodding or tilting his/her head to one side only while the user is on a voice call using the information processing apparatus 100. Further, for example, when the user performs a gesture such as looking up at the sky, the information processing apparatus 100 may output surrounding sound of the other party only at that time.

The information processing apparatus 100 may output presence information of another user only when the user is in a particular place or, on the contrary, may output no presence information of another user only when the user is in a particular place.

For example, the information processing apparatus 100 may output information of a position relative to a position of the other sharing party only when the user and the other party exist within a predetermined range. Further, for example, in a case where there is a loud noise around the user, the information processing apparatus 100 may give no notification using sound.

The information processing apparatus 100 may output presence information of another user only when the user performs particular operation or, on the contrary, may output no presence information of another user only when the user performs particular operation.

For example, the information processing apparatus 100 may output behavior and an activity intensity of another user only when the user picks up the information processing apparatus 100. Further, for example, only immediately after a target user displayed on the display 161 is changed, the information processing apparatus 100 may output all presence information of the user. Further, for example, the information processing apparatus 100 may perform only light emission of the LED device 162 when the user suspends the information processing apparatus 100 from his/her neck. Further, for example, the information processing apparatus 100 may display no information on positions in a mode in which presence information of a plurality of people is output.

The information processing apparatus 100 may output presence information of another user only when the information processing apparatus 100 enters a particular state or, on the contrary, may output no presence information of another user only when the information processing apparatus 100 enters a particular state.

For example, the information processing apparatus 100 may output only an on/off state of a power supply of an information processing apparatus 100 of the other party when a communication line becomes unstable. Further, for example, the information processing apparatus 100 may output only position information when a remaining battery is low.

The information processing apparatus 100 may output presence information of another user only in a particular period of time or, on the contrary, may output no presence information of another user only in a particular period of time. For example, the information processing apparatus 100 may output presence information of another user only at night.

Note that the examples described above are merely examples, and which presence information is output in which state is variously determined on the basis of a setting of the information processing apparatus 100.

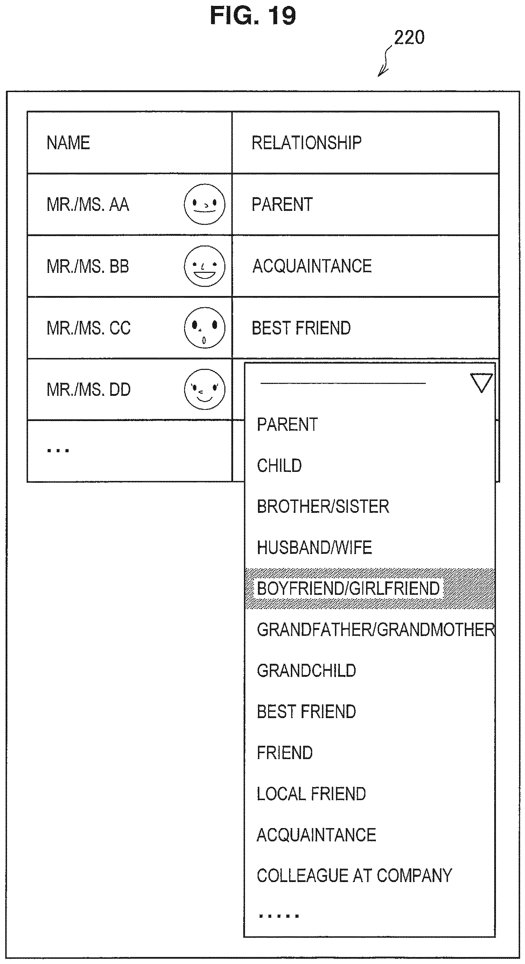

Next, an example of a GUI used in a case where the user is caused to set a relationship of a user to whom presence information is to be presented. FIG. 19 is an explanatory view showing an example of a GUI output by the information processing apparatus 100 and is an explanatory view showing an example of a GUI used in a case where the user is caused to set a relationship of a user to whom presence information is to be presented. A GUI 220 shown in FIG. 19 causes the relationship of the user to whom presence information is to be presented to be selected by using a pull-down menu.

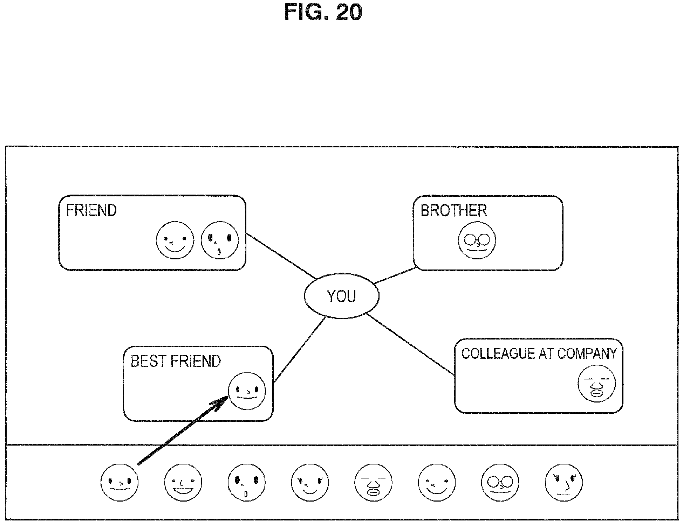

FIG. 20 is an explanatory view showing an example of a GUI output by the information processing apparatus 100 and is an explanatory view showing an example of a GUI used in a case where the user is caused to set a relationship of a user to whom presence information is to be presented. The GUI shown in FIG. 20 causes the relationship of the user to whom presence information is to be presented to be selected by the user's drag-and-drop operation.

Note that those GUIs may be displayed by another apparatus cooperating with the information processing apparatus 100, e.g., a device having a comparatively large screen size, such as a personal computer, a tablet terminal, or a smartphone.

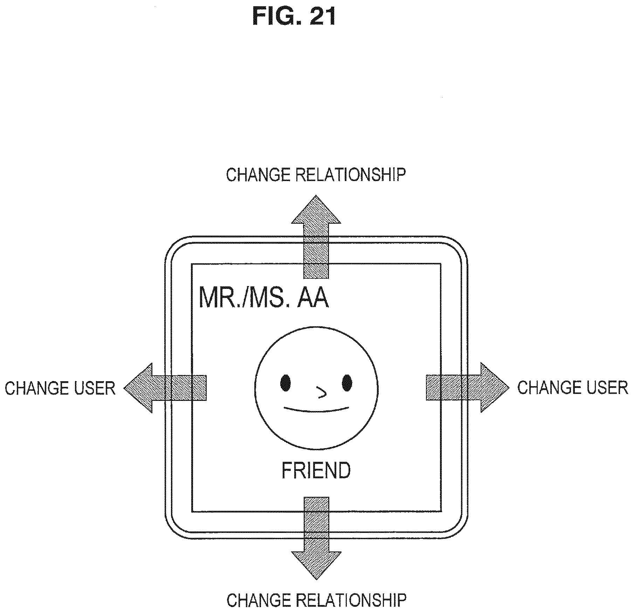

FIG. 21 is an explanatory view showing an example of a GUI output by the information processing apparatus 100 and is an explanatory view showing an example of a GUI used in a case where the user is caused to set a relationship of a user to whom presence information is to be presented. The GUI shown in FIG. 21 causes the relationship of the user to whom presence information is to be presented to be selected by the user's swipe operation or the like in a vertical direction or a horizontal direction on a screen. The GUI shown in FIG. 21 is designed for the purpose of being displayed on a device having a comparatively small screen size, such as a wrist-watch type terminal.

Individually setting a relationship between the user and each user serving as the other party is burdensome for the user. Therefore, the information processing apparatus 100 may estimate the relationship on the basis of a setting on an SNS, a frequency of calls, position information of the user and the other party, content of messages exchanged in a message service, and the like and urge the user to only conduct a check or perform correction operation. Further, for example, the information processing apparatus 100 may automatically set the relationship on the basis of content of a setting of a user serving as the other party. For example, when a certain user AA sets a user BB as "parent", the user AA is clearly a "child" of the user BB, and therefore the information processing apparatus 100 may automatically set a relationship of the user AA seen from the user BB as "child". Further, for example, when a certain user CC sets a user DD as "best friend", it is highly likely that the user CC is a "best friend" also for the user DD, and therefore the information processing apparatus 100 may automatically set a relationship of the user CC seen from the user DD as "best friend".

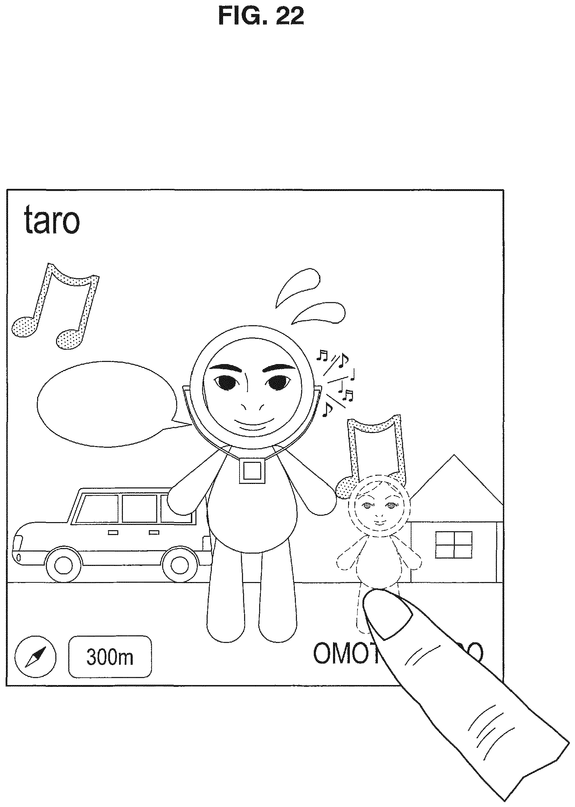

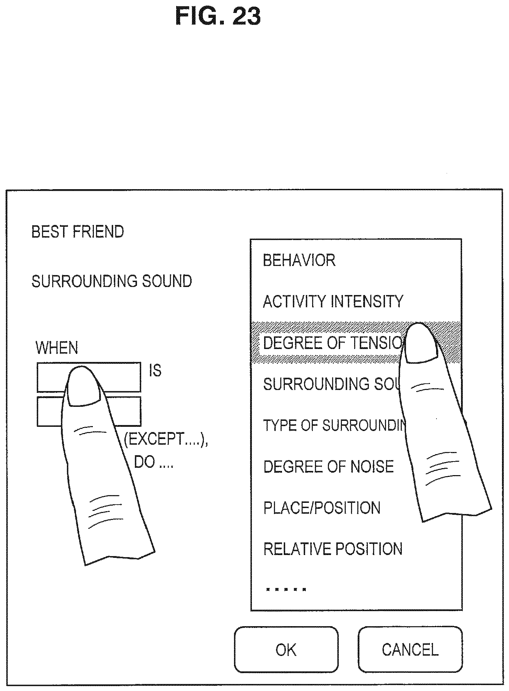

Next, an example of a GUI for causing the user to input a setting for changing an amount of presence information to be opened to or displayed on the information processing apparatus 100 of the other party in accordance with a relationship with the other party. FIGS. 22 and 23 are explanatory views showing examples of a GUI output by the information processing apparatus 100 and are explanatory views showing examples of a GUI for causing the user to input a setting for changing an amount of presence information to be opened to or displayed on the information processing apparatus 100 of the other party in accordance with a relationship with the other party.

The GUI shown in FIG. 22 is a GUI for causing the user to input a setting of presence information to be opened to a best friend. For example, in a case where it is not desirable to present a user staying together with the user to the best friend, the user operates a small avatar so that the small avatar is hidden or is semitransparent. There are various methods of causing the small avatar to be hidden or to be semitransparent, and, for example, the small avatar may be touched or may be moved to outside of a screen by swipe operation. The information processing apparatus 100 can set the amount of presence information to be opened to the best friend by causing the user to operate the GUI shown in FIG. 22.

Further, the information processing apparatus 100 may set granularity of presence information to be opened to a best friend by the user operation with respect to the GUI shown in FIG. 23. The GUI shown in FIG. 23 is a GUI for causing the user to set granularity of presence information to be presented and a condition for permission/non-permission of opening of the presence information.

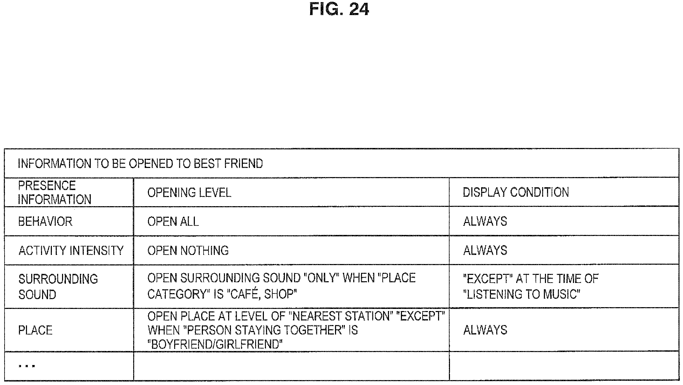

A GUI may be displayed on another apparatus cooperating with the information processing apparatus 100 and a setting for changing an amount of presence information to be opened to or displayed on the information processing apparatus 100 of the other party in accordance with a relationship with the other party may be input to the apparatus by the user. FIG. 24 is an explanatory view showing an example of a GUI for causing granularity of presence information to be opened to another person and an opening condition to be set by using list display. Because the GUI shown in FIG. 24 performs list display, it is possible to easily cause the user to set granularity of presence information to be opened to another person and an opening condition.

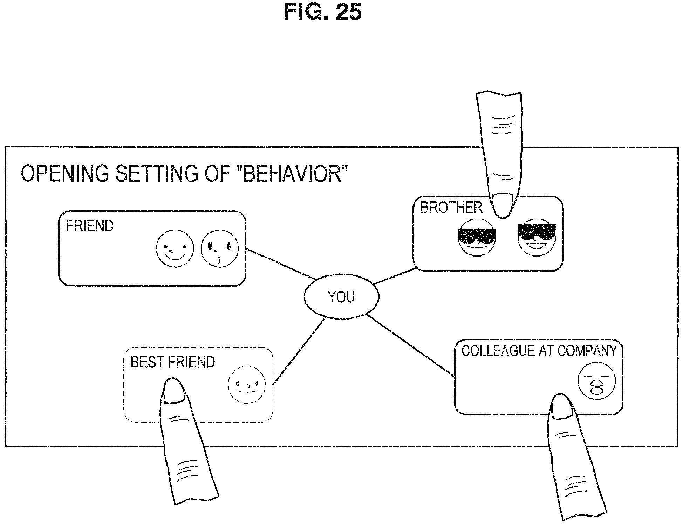

Next, there will be shown an example of a GUI for causing the user to input a setting for changing an amount of presence information to be opened to or displayed on an information processing apparatus 100 of another user in accordance with a type of the presence information. FIG. 25 is an explanatory view showing an example of a GUI for causing the user to input a setting for changing an amount of presence information to be opened to or displayed on an information processing apparatus 100 of another user in accordance with a type of the presence information.

The GUI shown in FIG. 25 is an example of a GUI for causing the user to input a setting for opening in a case where, for example, behavior is opened to the information processing apparatus 100 of the another user as presence information. FIG. 25 shows a state in which the following setting is provided: behavior is opened to a friend and a colleague at a company but the behavior is not opened to a brother and a best friend. In this GUI shown in FIG. 25, for example, an icon of a face may be blindfolded or an icon of a face may be semitransparent in a state in which behavior is not opened. Further, when the user performs predetermined operation such as a long press with respect to each group, display of a setting screen may transition to a GUI for causing the user to set granularity of presence information to be presented and a condition for permission/non-permission of opening of the presence information, which is shown in, for example, FIG. 23.

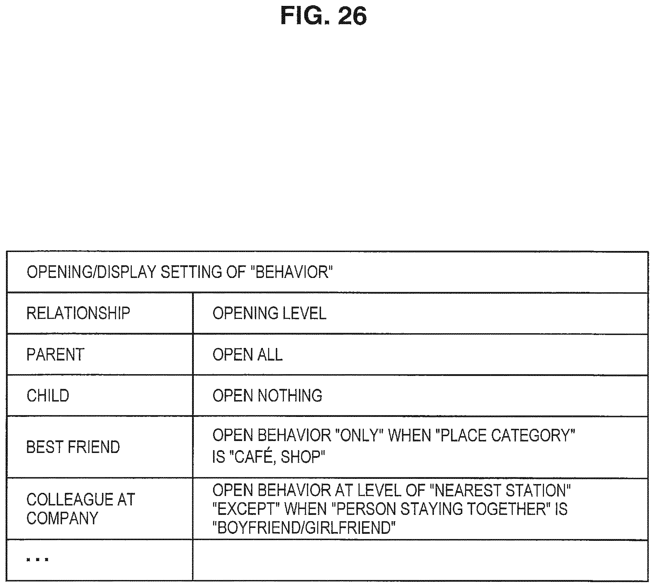

A GUI may be displayed on another apparatus cooperating with the information processing apparatus 100 and a setting for changing an amount of presence information to be opened to or displayed on an information processing apparatus 100 of another user in accordance with a type of presence information may be input to the apparatus by the user. FIG. 26 is an explanatory view showing an example of a GUI for causing the user to input a setting for changing an amount of presence information to be opened to or displayed on an information processing apparatus 100 of another user in accordance with a type of the presence information by using list display.

As described above, the information processing apparatus 100 according to the embodiment of the present disclosure can cause the user to set content of presence information to be opened to another user and granularity thereof by using a GUI. However, not only a case where the information processing apparatus 100 causes a user on a transmission side to set content of presence information to be opened to another user or granularity thereof but also a case where opening of presence information is requested by a user on a reception side is considered. Hereinafter, an example of a GUI used in a case where a user on a reception side requests opening of presence information.

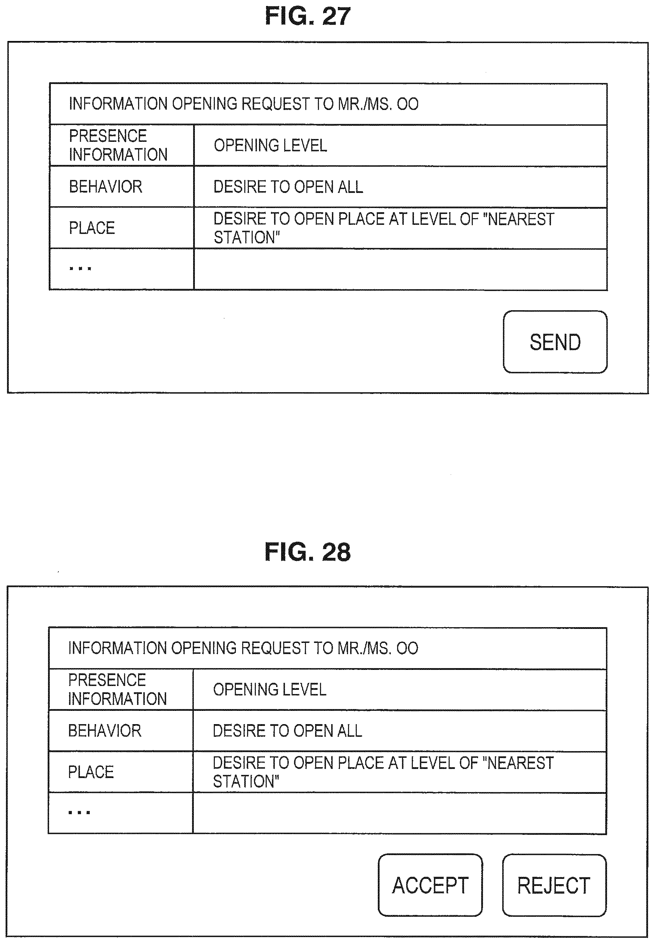

FIG. 27 is an explanatory view showing an example of a GUI used in a case where a user on a reception side requests opening of presence information. The GUI shown in FIG. 27 is an example of a GUI for causing the user on the reception side to input a request for which type of presence information is desired to be opened at which granularity with respect to a transmitter side of presence information. FIG. 27 shows an example where the following setting is provided: the transmitter side of the presence information is requested to open all types of behavior and open a place at a level of "nearest station".

When the user on the reception side requests opening of presence information as described above, a GUI may cause the user on the transmission side to set whether to accept or reject the request.

FIG. 28 is an explanatory view showing an example of a GUI for causing a user on a transmission side to set whether to accept an opening request of presence information required from a user on a reception side. The GUI shown in FIG. 28 is an example of a GUI for causing the user on the transmission side to, in a case where the user on the reception side sets an opening request as in the GUI shown in FIG. 27, set whether to accept or reject the opening request.

The information processing apparatus 100 presents the GUIs shown in FIGS. 27 and 28 to the users on the transmission side and the reception side, and therefore the user on the reception side can request opening content and opening granularity of presence information from the user on the transmission side, and the user on the transmission side can accept or reject the request.

Note that each GUI described above can be displayed on the display 161 by, for example, control by the display control unit 150.

### <2. Hardware configuration example>

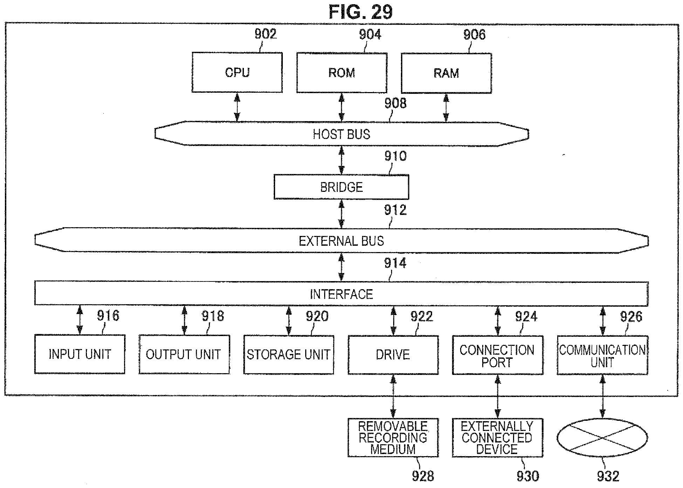

Next, a hardware configuration of the information processing apparatus 100 according to an embodiment of the present disclosure will be described with reference to FIG. 29. FIG. 29 is a block diagram illustrating a hardware configuration example of the information processing apparatus 100 according to the embodiment of the present disclosure. Each of the algorithms described above can be performed by using, for example, the hardware configuration of the information processing apparatus shown in FIG. 29. That is, the processing of each of the algorithms can be realized by controlling the hardware shown in FIG. 29 using a computer program.

Note that the mode of this hardware shown in FIG. 29 is arbitrary, and may be, for example, a personal computer, a mobile information terminal such as a mobile phone, a PHS or a PDA, a game machine, a contact or non-contact IC chip, a contact or non-contact IC card, a loud speaker, a television set, a monitor, a wearable device, or various types of information appliances. Moreover, the PHS is an abbreviation for Personal Handy-phone System. Also, the PDA is an abbreviation for Personal Digital Assistant.

As shown in FIG. 29, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, and controls entire operation or a part of the operation of each structural element on the basis of various programs recorded on the ROM 904, the RAM 906, the storage unit 920, or a removable recording medium 928. The ROM 904 is a device for storing a program to be read by the CPU 902 or data or the like used in an arithmetic operation. The RAM 906 temporarily or perpetually stores, for example, a program to be read by the CPU 902 or various parameters or the like appropriately changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote controller that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. The CRT is an abbreviation for Cathode Ray Tube. In addition, the LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928, for example, a magnetic disk, an optical disc, a magneto-optical disc, or a semiconductor memory, or writes information in the removable recording medium 928. The removable recording medium 928 is, for example, a DVD medium, a Blu-ray medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is, for example, a USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. The USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. In addition, the network 932 connected to the communication unit 926 is configured from a wire-connected or wirelessly connected network, and is the Internet, a home-use LAN, infrared communication, visible light communication, broadcasting, or satellite communication, for example. The LAN is an abbreviation for Local Area Network. Also, the WUSB is an abbreviation for Wireless USB. Furthermore, the ADSL is an abbreviation for Asymmetric Digital Subscriber Line.

### <3. Conclusion>

As described above, according to an embodiment of the present disclosure, there is provided the information processing apparatus 100 for, in a case where presence information of a user is opened to another user, determining a type of the presence information to be opened and granularity of the presence information at the time of opening on the basis of a relationship with the other party to whom the presence information is to be opened.

In information processing according to an embodiment of the present disclosure, a type of presence information to be opened and granularity of the presence information at the time of opening are determined on the basis of a relationship with the other party to whom the presence information is to be opened as described above. Thus, it is possible to easily open presence information while protecting privacy of a user who attempts to open the presence information.

It may not be necessary to chronologically execute respective steps in the processing, which is executed by each device of this specification, in the order described in the sequence diagrams or the flow charts. For example, the respective steps in the processing which is executed by each device may be processed in the order different from the order described in the flow charts, and may also be processed in parallel.

Furthermore, it becomes possible to generate a computer program which makes a hardware device, such as a CPU, a ROM, and a RAM incorporated in each device demonstrate the functions equivalent to the configurations of the above described devices. In addition, it becomes also possible to provide a storage medium which stores the computer program. In addition, respective functional blocks shown in the functional block diagrams may be constituted from hardware devices or hardware circuits so that a series of processes may be implemented by the hardware devices or hardware circuits.

In addition, some or all of the functional blocks shown in the functional block diagrams used in the above description may be implemented by a server device that is connected via a network, for example, the Internet. In addition, configurations of the functional blocks shown in the functional block diagrams used in the above description may be implemented in a single device or may be implemented in a system in which a plurality of devices cooperate with one another. The system in which a plurality of devices cooperate with one another may include, for example, a combination of a plurality of server devices and a combination of a server device and a terminal device.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   an acquisition unit configured to acquire relationship information indicating a relationship between a first user and a second user different from the first user; and
   a control unit configured to change, on the basis of the relationship information, a degree of detail of presentation information to be presented to the second user on the basis of status information indicating a status of the first user.
(2) The information processing apparatus according to (1),
   in which the relationship is a social relationship.
(3) The information processing apparatus according to (1) or (2),
   in which the control unit changes the degree of detail of the presentation information on the basis of the relationship and position information of the first user.
(4) The information processing apparatus according to (3),
   in which the control unit changes the degree of detail of the presentation information on the basis of the relationship, the position information of the first user, and position information of the second user.
(5) The information processing apparatus according to (1) or (2),
   in which the control unit changes the degree of detail of the presentation information on the basis of the relationship and the status of the first user.
(6) The information processing apparatus according to (5),
   in which the control unit changes the degree of detail of the presentation information when the first user performs particular behavior as the status of the first user.
(7) The information processing apparatus according to (5),
   in which the control unit changes the degree of detail of the presentation information when the first user is positioned in a particular place as the status of the first user.
(8) The information processing apparatus according to (5),
   in which the control unit changes the degree of detail of the presentation information when the first user performs particular operation as the status of the first user.
(9) The information processing apparatus according to (5),
   in which the control unit changes the degree of detail of the presentation information when the own apparatus enters a particular state as the status of the first user.
(10) The information processing apparatus according to (5),
   in which the control unit changes the degree of detail of the presentation information when a particular time comes as the status of the first user.
(11) The information processing apparatus according to any one of (1) to (10),
   in which the control unit changes the degree of detail of the presentation information by using a status of the second user.
(12) The information processing apparatus according to any one of (1) to (11), in which the control unit automatically sets the relationship on the basis of a relationship set by the second user with respect to the first user.
(13) The information processing apparatus according to any one of (1) to (12),
   in which the control unit generates information for displaying a screen that causes the first user to set the degree of detail of the presentation information based on the relationship.
(14) The information processing apparatus according to any one of (1) to (13),
   in which the control unit presents sound around the first user to the second user as the presentation information.
(15) The information processing apparatus according to any one of (1) to (14),
   in which the control unit presents an image of surroundings of the first user to the second user as the presentation information.
(16) The information processing apparatus according to any one of (1) to (15),
   in which the control unit presents switching of behavior of the first user to the second user as the presentation information.
(17) The information processing apparatus according to any one of (1) to (16),
   in which the control unit changes the degree of detail of the presentation information to be presented to a group including the second user on the basis of a relationship between the first user and the group.
(18) An information processing method including:
   causing a computer to acquire relationship information indicating a relationship between a first user and a second user different from the first user; and
   causing the computer to change, on the basis of the relationship information, a degree of detail of presentation information to be presented to the second user on the basis of status information indicating a status of the first user.
(19) A computer program for causing a computer to execute
   acquiring relationship information indicating a relationship between a first user and a second user different from the first user, and
   changing, on the basis of the relationship information, a degree of detail of presentation information to be presented to the second user on the basis of status information indicating a status of the first user.

### Reference Signs List

- 1: information processing system
- 10: network service
- 100: information processing apparatus
- 100a: information processing apparatus
- 100b: information processing apparatus
- 100c: information processing apparatus
- 100d: information processing apparatus
- 110: headset unit
- 111: acceleration sensor
- 112: gyro sensor
- 113: utterance collection microphone
- 114: surrounding sound collection microphone
- 115: speaker
- 116: heart rate sensor
- 130: main body unit
- 131: GPS sensor
- 132: network I/F
- 133: vibration device
- 134: electrocardiographic sensor
- 135: geomagnetic sensor
- 136: arithmetic logic unit
- 137: storage unit
- 141: behavior determination unit
- 142: activity intensity determination unit
- 143: degree-of-tension determination unit
- 144: degree-of-noise determination unit
- 145: surrounding-sound-type determination unit
- 146: position detection unit
- 147: utterance detection unit
- 148: head movement detection unit
- 149: display gazing detection unit
- 150: display control unit
- 151: light emission control unit
- 152: sound reproduction control unit
- 153: information transmission/reception control unit
- 154: granularity determination unit
- 160: display unit
- 161: display
- 162: LED device
- 163: touchscreen
- 164: camera
- 165: sensor unit

## Claims

1. An information processing apparatus comprising:
an acquisition unit configured to acquire relationship information indicating a relationship between a first user and a second user different from the first user; and
a control unit configured to change, on the basis of the relationship information, a degree of detail of presentation information to be presented to the second user on the basis of status information indicating a status of the first user.

2. The information processing apparatus according to claim 1,
wherein the relationship is a social relationship.

3. The information processing apparatus according to claim 1,
wherein the control unit changes the degree of detail of the presentation information on the basis of the relationship and position information of the first user.

4. The information processing apparatus according to claim 3,
wherein the control unit changes the degree of detail of the presentation information on the basis of the relationship, the position information of the first user, and position information of the second user.

5. The information processing apparatus according to claim 1,
wherein the control unit changes the degree of detail of the presentation information on the basis of the relationship and the status of the first user.

6. The information processing apparatus according to claim 5,
wherein the control unit changes the degree of detail of the presentation information when the first user performs particular behavior as the status of the first user.

7. The information processing apparatus according to claim 5,
wherein the control unit changes the degree of detail of the presentation information when the first user is positioned in a particular place as the status of the first user.

8. The information processing apparatus according to claim 5,
wherein the control unit changes the degree of detail of the presentation information when the first user performs particular operation as the status of the first user.

9. The information processing apparatus according to claim 5,
wherein the control unit changes the degree of detail of the presentation information when the own apparatus enters a particular state as the status of the first user.

10. The information processing apparatus according to claim 5,
wherein the control unit changes the degree of detail of the presentation information when a particular time comes as the status of the first user.

11. The information processing apparatus according to claim 1,
wherein the control unit changes the degree of detail of the presentation information by using a status of the second user.

12. The information processing apparatus according to claim 1,
wherein the control unit automatically sets the relationship on the basis of a relationship set by the second user with respect to the first user.

13. The information processing apparatus according to claim 1,
wherein the control unit generates information for displaying a screen that causes the first user to set the degree of detail of the presentation information based on the relationship.

14. The information processing apparatus according to claim 1,
wherein the control unit presents sound around the first user to the second user as the presentation information.

15. The information processing apparatus according to claim 1,
wherein the control unit presents an image of surroundings of the first user to the second user as the presentation information.

16. The information processing apparatus according to claim 1,
wherein the control unit presents switching of behavior of the first user to the second user as the presentation information.

17. The information processing apparatus according to claim 1,
wherein the control unit changes the degree of detail of the presentation information to be presented to a group including the second user on the basis of a relationship between the first user and the group.

18. An information processing method comprising:
causing a computer to acquire relationship information indicating a relationship between a first user and a second user different from the first user; and
causing the computer to change, on the basis of the relationship information, a degree of detail of presentation information to be presented to the second user on the basis of status information indicating a status of the first user.

19. A computer program for causing a computer to execute
acquiring relationship information indicating a relationship between a first user and a second user different from the first user, and
changing, on the basis of the relationship information, a degree of detail of presentation information to be presented to the second user on the basis of status information indicating a status of the first user.
